(19) **Europäisches Patentamt / European Patent Office / Office européen des brevets**

(11) **EP 1 767 964 B1**

(12) **EUROPEAN PATENT SPECIFICATION**

(45) Date of publication and mention
of the grant of the patent:
**31.12.2008 Bulletin 2009/01**

(51) Int Cl.:
*G02B 5/18* (2006.01)      *E06B 9/24* (2006.01)
*F24J 2/40* (2006.01)      *B32B 17/10* (2006.01)

(21) Application number: **05405558.7**

(22) Date of filing: **26.09.2005**

(54) **Heat-reflecting pane with zero-order diffractive filter**

Hitze reflektierende Scheibe mit Beugungsfilter nullter Ordnung

Vitre avec filtre diffractif d'ordre zéro réfléchissant la chaleur

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**28.03.2007 Bulletin 2007/13**

(73) Proprietor: **CSEM Centre Suisse d'Electronique et de Microtechnique SA**
**2007 Neuchâtel (CH)**

(72) Inventor: **Walter, Harald**
**8810 Horgen (CH)**

(74) Representative: **Schneider Feldmann AG**
**Patent- und Markenanwälte**
**Beethovenstrasse 49**
**Postfach 2792**
**8022 Zürich (CH)**

(56) References cited:
WO-A-20/05036218      DE-A1- 3 840 262
US-A1- 2004 047 388

• BENARD C, EKOUHOH A, GOBIN D, WIRGIN A: "On the use of grating or mesh selective filters to increase the efficiency of flat plate solar collectors" 1978, , UK , XP009062371 * page 859 - page 863 * * figure 1 *

• NIGGEMANN M ET AL: "PERIODIC MICROSTRUCTURES FOR LARGE AREA APPLICATIONS GENERATED BY HOLOGRAPHY" PROCEEDINGS OF THE SPIE, SPIE, BELLINGHAM, VA, US, vol. 4438, 1 August 2001 (2001-08-01), pages 108-115, XP008012627 ISSN: 0277-786X

• HAMMARBERG E ET AL: "Antireflection treatment of low-emitting glazings for energy efficient windows with high visible transmittance" PREPARATION AND CHARACTERIZATION, ELSEVIER SEQUOIA, NL, vol. 442, no. 1-2, 1 October 2003 (2003-10-01), pages 222-226, XP004458326 ISSN: 0040-6090

• GOMBERT A ET AL: "Replicated microstructures with optical functions in solar and display applications" PROCEEDINGS OF THE SPIE, vol. 5184, 2003, pages 60-73, XP002369570 SPIE, BELLINGHAM,WA,2003

• ROSENBLATT D. ET AL: 'Resonant Grating Waveguide Structures' IEEE JOURNAL OF QUANTUM ELECTRONICS vol. 33, no. 11, 01 November 1997, IEEE SERVICE CENTER, PISCATAWAY, NJ, pages 2038 - 2059, XP000725006

• GOMBERT A. ET AL: 'Glazing with very high solar transmittance' SOLAR ENERGY vol. 62, no. 3, 01 March 1998, PERGAMON PRESS. OXFORD, GB, pages 177 - 188, XP004122620

EP 1 767 964 B1

**Description**

FIELD OF THE INVENTION

The invention relates to the management of infrared (IR) radiation, and more specifically to reflection or reflection and absorption of a part of the infrared spectral range by means of a zero-order diffractive filter. In particular, the invention relates to a pane, a method for its manufacturing, and a method for transmitting, absorbing and/or reflecting incident infrared and visible electromagnetic radiation through, in and/or from a pane, according to the preambles of the independent claims.

BACKGROUND OF THE INVENTION

Controlling the transmission, reflection and absorption of infrared (IR) radiation (also referred to as "IR light") of glass or polymer materials is important for many applications. For instance the optimization of the radiation budget in vehicles or buildings is a large area application of techniques that manage infrared light. Such techniques are summarized as solar-control and low-E (low emission) techniques. Solar-control techniques reduce the transmission of solar energy into a building or a vehicle, whereas low-E techniques reduce the transmission of energy from inside a building to the outside. Solar-control of automotive and architectural glazing has become a global trend because of the need to increase comfort and lower energy consumption of air conditioners. Nowadays in office buildings the demand for energy for cooling in the summer is often higher than for heating in the winter.

The widely used technique for IR-radiation management applies a thin-film based Fabry-Perot interference filter as described, e.g., in U.S. Patent No. 4,337,990, U.S. Patent No. 4,799,745 or U.S. Patent No. 6,673,427. Such filters consist of a multilayer stack of transparent layers of sputter-deposited metal and dielectric spacer layers. The filter can be coated directly on glass or on polymer foil which is laminated to the glass in a second step. Due to the need of a very high homogeneity and reproducibility of the thickness and the optical properties, the layers are sputter-deposited. This process is slow and the investment in such production coating lines is very high. Thus, such interference filters are costly.

Another approach for energy-saving windows as described in U.S. Patent No. 6,094,306 is based on two sets of diffraction gratings in series, capable to deflect the IR spectral component of an input radiation. One of the gratings is fixed and the other is movable to switch between two modes. In one of the modes ("summer mode") the two diffraction gratings are positioned with respect to each other to redirect the IR spectral components by additive diffraction to a scupper, which redirects the undesired radiation to a heat sink. In the other mode ("winter mode") the gratings are repositioned so that their deflections are subtractive. Thus the sun rays are essentially undiffracted and enter the room. Such windows need mechanically movable parts. They are therefore vulnerable and expensive.

Yet another sun protection device is described in WO-03/052232. It is based on microstructures and consists of an at least partially transparent material. One side is non-structured flat and the other side comprises parallel, linearly extending prismatic structural elements with a size of about 15 $\mu$m (see also V. Wittwer, P. Nitz, A. Gombert, "Application of microstructured surfaces in architectural glazings", Proceedings of the 4th International Conference on Coatings on Glass, 2002, pp. 643-647). The structural elements comprise a triangular cross-sectional surface. Based on refraction and total reflection the device reflects the sun light at certain angles. Due to the size of the microstructures the device scatters light and thus reduces the quality of the view outside of the window.

Yet another technique is based on colored glass. It reduces the cooling load in the summer months, but it limits the available daylight. Therefore it increases the use of electric lights. The production of such glass is not very costly but due to the lack of selectivity between the visible and infrared part of the solar spectrum the energy efficiency is poor.

Still another technique for management of infrared light is based on a polymer interlayer for laminated glass containing ultra-fine indium tin oxide (ITO) particles as described in JP-2002/326846. ITO well reflects and absorbs infrared light above a wavelength of 1000 nm, but it is a very expensive material. Thus this technique is rather costly. Furthermore its transmission in the near-infrared part of the solar spectrum at about 700 nm to 1000 nm is still relatively high.

Bernard et al. disclose in "On the use of grating or mesh selective filters to increase the efficiency of flat plate solar collectors" (Laboratoire des Signaux et Systèmes (CNRS) Ecole Supérieure d'Electricité), that losses in a flat plate collector resulting from reemission of infrared radiation can be reduced by the introduction of a selective filter which is transparent to visible solar radiation and highly reflecting for reemitted infrared radiation.

Niggeman et al. disclose in "Periodic microstructures for large area applications generated by holography", proceedings of the SPIE, SPIE, Bellingham, VA, US vol. 4438, 1 August 2001, that periodic surface-relief structures with grating constants from 200 nm to 100 microns on large areas leads to a wide field of applications, and that microstructures like these can be produced on large areas by holographic exposure processes.

Okada et al. disclose a polarizing element usable for two wavelengths in a predetermined wavelength region and having a simple structure. The polarizing element has a two-layer structure in which a gird pattern of a constant period having a triangular cross-section is formed on a substrate and a film with a refractive index higher than that of the substrate is deposited on the grid pattern. When first and second wavelengths 1 , 2 satisfy 1 < 2 , cos 0 < 1 where 0 is the angle of incidence on the grid surface. The grid period, the grid height, and the film thickness are determined so that with respect to the first wavelength I , the reflection efficiency of the TE-polarized zero-order diffracted light is a predetermined value or more and the transmission efficiency of the TM-polarized zero-order diffracted light is a predetermined value or more and so that with respect to the wavelength 2 , the transmission efficiency of the TE-polarized zero-order diffracted light is a predetermined value or more and the reflection efficiency of the TM-polarized zero-order diffracted light is a predetermined value or more.

Hammarberg et al. disclose in "Antireflecion treatment of low-emitting glazings for energy efficient windows with high visible transmittance" a study whose purpose is to increase the visible transmittance of a low-emittance (low-e) glazing as much as possible by antireflection treatment. This has been carried out by depositing thin porous films of silicon dioxide, $SiO_2$ on both sides of a commercial glazing with a pyrolyitc low-e tin oxide-based coating.

A wide variety of techniques are used for control of solar luminous transmittance through windows in buildings based on fixed and adjustable mechanical methods such as shades, fins, blinds, louvers and the like. The fixed sun control systems are a compromise between solar heat gain control and daylight utilization, and the movable systems possess high installation and servicing costs. All these systems reduce the view through the windows.

SUMMARY OF THE INVENTION

An object of the present invention is to mitigate at least some of the above-mentioned drawbacks of the state of the art.

This object and other objects are solved by the pane, and the manufacturing method as defined in the independent claims 1 and 9. Preferred, advantageous or alternative features of the invention are set out in dependent claims.

The invention provides methods for mass production of such filters at high speed. Some of the claimed methods are free of expensive vacuum processes.

BRIEF DESCRIPTION OF THE DRAWINGS

Embodiments of the invention and, for comparison, a prior-art device are described in greater detail hereinafter relative to the attached schematic drawings.

Figure 1      shows cross sections through two embodiments of a zero-order diffractive filter for use in a pane according to the invention.

Figure 2      shows a side view of a pane according to the invention.

Figure 3      shows a diagram of the normalized solar flux vs. the light wavelength.

Figures 4-6      show cross sections through further embodiments of a zero-order diffractive filter for use in a pane according to the invention.

Figure 7      shows a diagram of (a) the transmission vs. the light wavelength in the visible and the NIR range and (b) the solar energy flux for a prior-art glass pane and embodiments of the pane according to the invention, for an angle of incidence of 60°.

Figure 8      shows a diagram of (a) the transmission vs. the light wavelength in the visible range and (b) the average transmission for a prior-art glass pane and embodiments of the pane according to the invention, for a viewing angle of 0°.

DESCRIPTION OF PREFERRED EMBODIMENTS

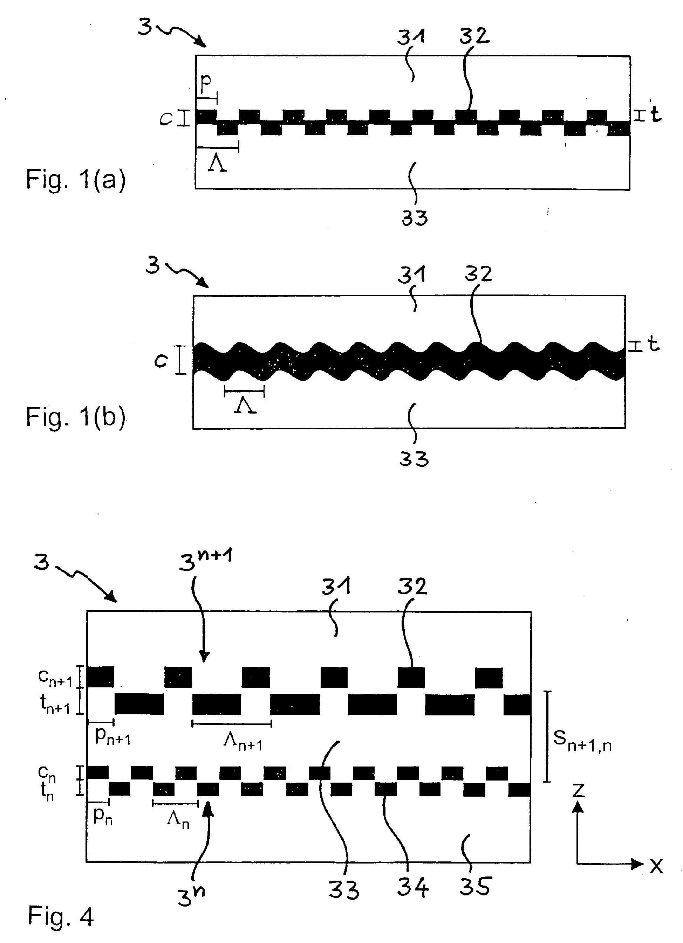

Zero-order diffractive filters, sometimes called resonant gratings, illuminated by polychromatic light, are capable of separating zero-diffraction-order output light from higher-diffraction-order output light. Examples of zero-order diffractive filters 3 are given in **Figures 1(a) and 1(b).** Such filters 3 comprise special microstructures, for example, parallel lines of a first dielectric material 32 with relatively high index of refraction $n_{high}$ surrounded by other dielectric materials 31, 33 with lower indices of refraction $n_{low}$ that might be equal to each other or differ from each other. Due to the microstructuring of the high-index layer 32 the filter 3 acts as a leaky waveguide. Low-index-of-refraction materials 31, 33 are, e.g., polymer ($n_{low}$ = 1.34-1.65), $SiO_2$ ($n_{low} \approx 1.46$) , $MgF_2$ ($n_{low} \approx 1.39$) or porous aerogel ($n_{low}$ close to 1.0). For instance, the index of refraction of sol-gel processed silica aerogel as described by Tsutsui et. al. ("Doubling Coupling-Out Efficiency in Organic Light-Emitting Devices Using a Thin Silica Aerogel Layer", Adv. Mater. 13, 2001, p.1149-1152) is between 1.01 and 1.10. Such porous layers can be wet-coated from a solution containing low-index of refraction nano-particles like silica and a small amount of binder, e.g., polymers like poly-vinylalcohol (PVA). The high-refractive-index material can be for example ZnS ($n_{high} \approx 2.38$), TiO$_2$ ($n_{high} \approx 2.1-2.5$), Ta$_2$O$_5$ ($n_{high} \approx 2.1-2.3$) or Si$_3$N$_4$ ($n_{high} \approx 2.03$). If the low-index materials 31, 33 possess indices of refraction well below 1.5, the high-index material 32 can even be a layer with an index of refraction of about 1.5, e.g., a polymer layer. A wet-process-able class of high-index materials 32 are nano-sized particles of a high-refractive-index material embedded in a polymeric matrix. For instance, mixtures of PbS nano-particles and gelatine possess indices of refraction of up to 2.5. Mixtures containing Al$_2$O$_3$, ZrO$_2$ or TiO$_2$-particles are also possible. The indices of refraction given here are data for a light wavelength of 550 nm.

The materials 31, 33 above and below the microstructured high-index layer 32 can have different indices of refraction, and one of them can be even air. All materials have to be transparent (which means transmission T > 50 %, preferably T > 75 %, particularly preferred T > 90 %) at least in a part of the desired spectral range. For instance in Europe, windscreens of cars must have a transparency in the visible spectral range of at least 75 %. To increase the transparency in the visible spectral range, the high-index material 32 can be covered by an antireflection (AR) layer (not shown).

These filters 3 possess characteristic reflection and transmission spectra, depending on the viewing angle and the orientation of the microstructure with respect to an observer. As the filters 3 are based on a resonance effect, they are used in narrow-band applications up to now, e.g., in anti-counterfeiting security devices and in the field of optoelectronics for communication systems.

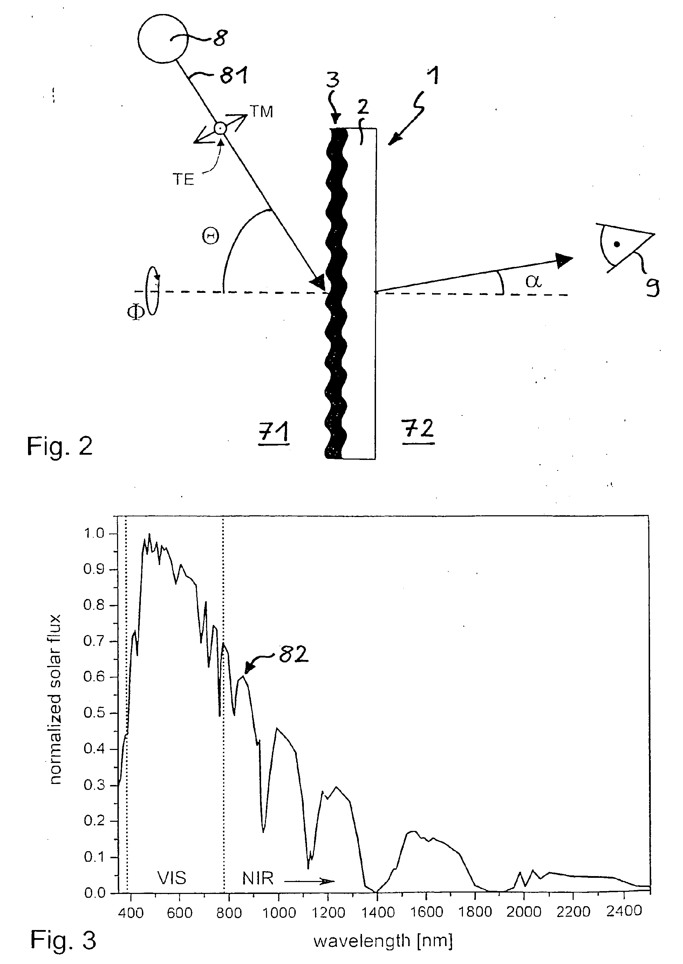

As described in the following, by tuning the parameters of such a filter 3 it is possible to reflect a broad part of the IR spectral range for a certain incidence angle $\Theta$ (see Figure 2). Parameters influencing the spectra are, for example, the period $\Lambda$, the thickness c of the high-index layer, the grating depth t, the fill factor $f = p/\Lambda$ and the profile of the microstructure. Suitable and preferred values of these parameters are listed in Table I.

Table I

| Parameter | Suitable range | Preferred range |
|---|---|---|
| Period $\Lambda$ (nm) | 500 - 1500 | 600 - 1000 |
| Fill factor $f = p/\Lambda$ | 0.2 - 0.8 | 0.3 - 0.7 |
| Thickness c of waveguide layer (nm) | 30 - 500 | 60 - 150 |
| Grating depth t (nm) | 30 - 500 | 60 - 300 |

The profile of the microstructure can be rectangular **(Figure 1(a))**, sinusoidal, or more complex **(Figure 1(b))**. An asymmetric profile such as a blazed grating can further optimize the optical performance of the filter 3, as the reflection spectra are not symmetric at rotation of such filters by $\Phi$ = 180° (in the plane of the filter 3).

**Figure 2** shows a zero-order diffractive filter 3 on a vertically positioned window or pane 1, e.g., of a building. The window 1 may essentially consist of a sheet of glass or plastic material that serves as a substrate for the filter 3. The window 1 divides up the space into an exterior half-space 71 and an interior half-space 72. A sun 8 emitting electromagnetic radiation 81 towards the window 1 is depicted in the exterior half-space 71, an observer 9 in the interior half-space 72. The zero-order diffractive filter 3 operates as a spectrally selective mirror having the property that the reflected and transmitted spectra of the mirror vary with an angle of incidence $\Theta$ and an angle of rotation $\Phi$. Increasing the angle of incidence $\Theta$ (where $\Theta$ = 0° means normal incidence) shifts the relevant peak in the reflectance to shorter wavelengths. In Mainz (Germany) in Europe (latitude 50°N) for instance, the sun shines on a vertically mounted glass plane at an angle of $\Theta$ = 63° at the beginning of the summer season (June 21) and at an angle of $\Theta$ = 40° at the end of the summer season (September 23). Therefore in this case a preferred solar-control filter 3 should possess a reflectance optimized for an angle of incidence of about $\Theta$ = 52°. In Miami (Florida) in the USA (latitude 25°N) these incidence angles are 90° (June 21) and 66° (September 23), respectively. The incidence angle for which the reflectance should be optimized for the Miami is thus $\Theta$ = 78°. At the same time the transmittance in the visible spectral range of such a filter 3 should be as high as possible for viewing angles $\alpha \in$ [0; 20°]. For not vertically mounted windows 1 the tilting angle has to bee taken into account.

For low-E applications a preferred design of the zero-order diffractive filter 3 possess in the near infrared spectral range from 780 nm to 1000 nm a reflectance as high as possible for incidence angles above $\Theta$ = 50°. The requirements for the transmittance in the visible range for near-perpendicular viewing directions are the same as for the solar-control filter.

A preferred design of the solar-control filter 3 possesses at the optimized incidence angle a high reflectance at a wavelength of about 860 nm. At this wavelength there is a local maximum 82 of the solar radiation, as shown in **Figure 3**. This local maximum covers over a spectral range of roughly 80 nm more than 50 % of the maximal solar flux.

A zero-order diffractive filter 3 with parallel grating lines diffracts light 81 incident at an angle of $\Theta$ > 0 and with

the incidence direction oriented perpendicular to the grating lines (see **Figure 2**), with different efficiencies depending on the polarization (TE or TM) of the light 81. Usually the diffraction efficiency is distinctly higher for light polarized in TE direction. Furthermore the wavelength with maximal reflectance differs for both polarization directions. As sunlight is unpolarized and therefore consists of roughly equal parts of TE and TM polarized light, the total efficiency of zero-order diffractive filters 3 can be optimized by the use of crossed grating structures. To compensate the different peak position in the reflectance of the two polarization states a preferred design of the filter 3 possesses different periods for the crossed gratings and adjusted grating parameters, such as structure depth, fill factor, line shape and thickness of the high-index layer 32.

Another possibility to enhance the performance of a zero-order diffractive filter 3 is to stack two or more grating structures $3^n$, $3^{n+1}$ one upon another. Such a setup is shown in **Figure 4**. If the stacked gratings $3^n$, $3^{n+1}$ possess different periods $\Lambda n$, $\Lambda_{n+1}$, they reflect different parts of the spectrum. Thus the reflected spectrum of a total system of two stacked gratings is given by

$$R_{tot} = R_1 + T_1 \times R_2 \quad ,$$

where $R_1$ and $T_1$ are the reflected and transmitted spectra of the first grating $3^n$, respectively, and $R_2$ is the reflected spectrum of the second grating $3^{n+1}$. Multiple reflections are neglected. If the distance $s_{n+1,n}$ between adjacent gratings $3^n$, $3^{n+1}$ is below 4 $\mu$m, additional interference effects occur. These effects can be used to optimize the reflection behavior of such a filter. For instance, destructive interference can reduce the reflection in the visible spectral range, thus enhancing the transparency. Furthermore, two stacked gratings rotated (around the z axis) with respect to each other by 90° can be optimized for TE and TM reflection in analogy to the crossed gratings.

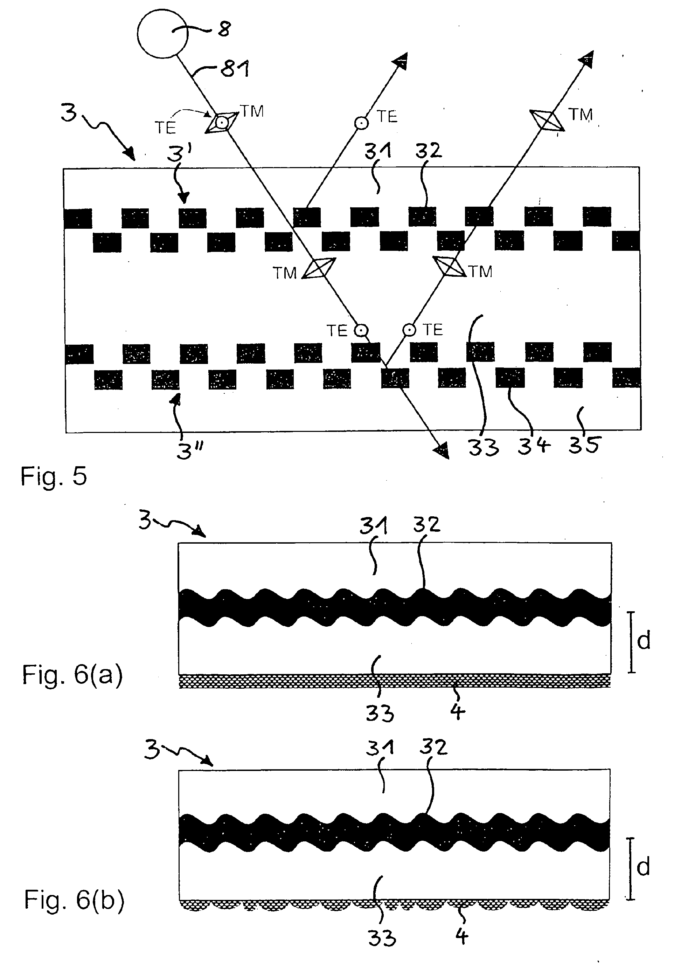

If two stacked and parallel aligned filters are separated by a spacer layer 33 that rotates the polarization direction of the incident light 81 by 90° ($\lambda/2$ layer), the diffraction efficiencies for TE and TM polarization can be further optimized. The corresponding setup is illustrated in **Figure 5**. A first filter 3' optimized to reflect a certain spectral range of TE polarized light is mostly passed by the TM component of the same spectral range. Passing the spacer layer 33 rotates the polarization direction from TM to TE. This TE polarized light is reflected at the second filter 3". It passes the first filter 3' again as it is converted to TM polarized light by the spacer layer 33. Thus nearly all incident light 81 of the certain spectral range is reflected by the stacked filter 3. In a preferred filter setup the two stacked filters 3', 3" possess identical periods. Fine-tuning of the two filters 3', 3" can be done by different layer thicknesses, grating depths or fill factors. The spacer layer 33 can be, e.g., a liquid crystal (LC) layer. An easy production of the $\lambda/2$ layer 33 is to coat, e.g., print, a liquid crystal polymer (LCP) on the first zero-order diffractive filter 3'. If the materials and coating parameters are chosen appropriately, the LCP is already aligned by the grating lines of the filter 3'. Another suitable alignment method is photo alignment (see H. Seiberle et al., "Photo-Aligned Anisotropical Optical Thin Films", Journal of the Society for Information Display Volume 12, Issue 1, pp. 87-92).

The filter characteristics of zero-order diffractive filters for the infrared spectral region can further be optimized by combining the filter structure 3 with a thin metal layer 4 with a transparency in the visible spectral range of more than 75 %. Examples of such setups are shown in **Figures 6(a) and 6(b)**. If a stack of two or more filters is used (cf. Figs. 4 and 5), the metal layer 4 can be placed in between or outside the stack. To keep a high transmittance, such metal layers 4 must be very thin, in the order of a few nanometers up to a few tens of nanometers. Depending on the material used, such thin metal layers 4 reflect a certain part of the (solar) spectrum. Due to their optical characteristics, preferred metals for such layers 4 are gold, silver, palladium, platinum or an alloy of at least two of these metals. The thin metal layer 4 may be plane, as shown in **Figure 6(a)**. If the thin metal layer 4 possesses a nanoscale structure **(Figure 6(b))**, the optical properties differ distinctly from those of thick layers or bulk material of the same metal. Due to the nanoscale structure, the electron gas of the metal is spatially confined, and therefore resonance effects occur upon excitation of plasmons. Depending on the metal material and the shape of the nanoscale structure (e.g., spherical, triangular or more complex), resonant absorption can be obtained over the whole visible spectral range ("Gold and silver nanoparticles: A class of chromophores with colors tunable in the range from 400 to 750 nm" Yugang Sun and Younan Xia, Analyst, 2003, 128, 686-691). If the distance d between the diffractive waveguide structure 3 and the thin metal layer 4 is below 4 $\mu$m, additional interference effects appear. Such interference effects can be used, e.g., to broaden the spectral range of the peak in the $0^{th}$ order reflectance and/or to enhance or decrease the fraction of light which is reflected or transmitted in other than $0^{th}$ order.

The described diffractive filters 3 can further be combined with other solar-control or low-E techniques. A preferred design of such a filter 3 possesses a high reflectance in the near infrared spectral range at wavelengths at which the other technique still yields a relatively high transmission. Even sputter-deposited multilayer thin-film coatings for solar-control applications possess a transmission of more than 30% in the spectral range of the local maximum in the solar spectrum at about 860 nm. If the distance between the diffractive waveguide structure 3 and the first layer of the other thin-film technique is smaller than 4 $\mu$m, additional interference effects appear, in analogy to the combination with a thin metal layer 4 described above (cf. Fig. 6). The interference effects can likewise be used to optimize the spectral characteristics of the total solar-control system.

Methods for the production of zero-order diffractive filters as described above are explained in the following. The easiest way is to form the diffractive structure in a substrate 2 or on a surface of the substrate 2 and afterwards coat the desired layers 31-33. The two steps can be carried out in the reverse order. Possible techniques to form the structure in or on glass or polymeric surfaces are, e.g., hot, cold or UV embossing. These techniques are even suitable for structuring polymeric foil in a roll-to-roll process. On surfaces sol-gel replication or self-assembly can be used. The latter is based on dewetting or phase separation or the like in polymer layer or polymer blend layers ("The control of thin film morphology by the interplay of dewetting, phase separation and microphase separation", P. Maller-Buschbaum, E. Bauer, O. Wunnicke and M. Stamm, J. Phys.: Condens. Matter, 2005, 17, 363-386). With the self-assembly approach even parallel grating lines can be produced just by choosing the right material and deposition parameters. The coating of the desired thin film(s) 31-33 can be done with vacuum techniques like, e.g., evaporation, sputtering or chemical vapor deposition (CVD), especially plasma-enhanced CVD (PECVD). All the mentioned techniques are suitable for roll-to-roll processes. On the other hand, vacuum-free wet-coating techniques can be used for the deposition of the thin film(s) likewise. The desired thin film(s) 31-33 can be deposited by dye coating, e.g., curtain coating or cascade coating, or by printing processes, especially gravure printing.

The foils or glass panes equipped with the described zero-order diffractive IR filter can be used in glazing for buildings or windows, especially windscreens, of vehicles like cars, lorries or train wagons. The filter 3 can be applied directly on the substrate 2, or it can be produced on a foil and laminated to the substrate 2 or placed between two substrates.

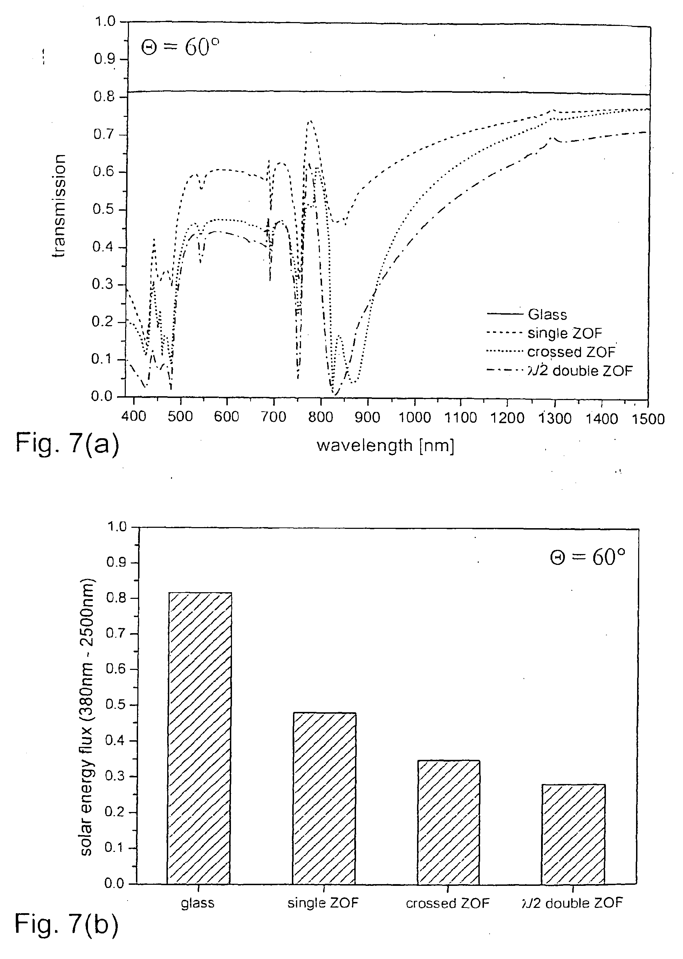

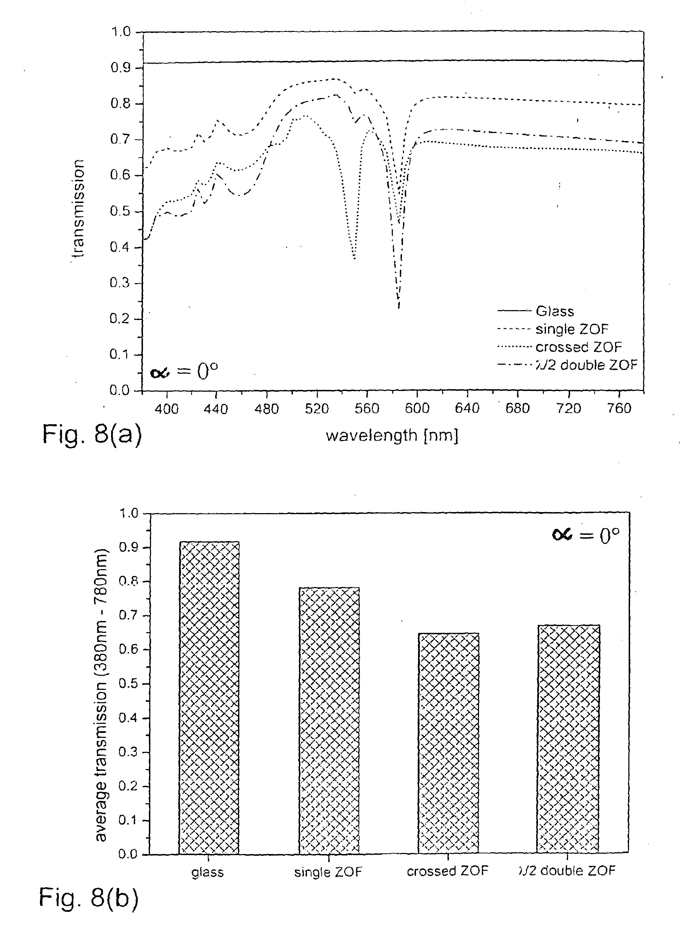

The following examples illustrate the different types of the zero-order filters (ZOF) 3 for the solar-control application. **Figure 7(a)** shows the simulated direct transmission at $\Theta = 60°$ of a glass pane ($n_m = 1.52$) and of the same glass pane with an embedded single ZOF ($\Lambda = 1000$ nm, c = 100 nm, t = 300 nm, $n_{high} = 2.39$) with rectangular shaped grating lines oriented perpendicular to the incidence direction of the solar radiation 81, an embedded stacked filter consisting of the same ZOF and an interferometrically uncoupled, a second ZOF ($\Lambda = 630$ nm, c = 100 nm, t = 300 nm) aligned parallel to the incidence direction of the solar radiation 81 and two embedded filters ($\Lambda = 1000$ nm, c = 100 nm, t = 300 nm) separated by a $\lambda/2$ spacer layer, both oriented perpendicular to the incidence direction of the solar radiation 81. The reflection of all these filters is optimized for the local maximum 82 in the solar flux at a wavelength of 860 nm. The effect of the described filters 3 on the solar energy flux is summarized in **Figure 7(b)**. As can be seen, the solar energy flux (cf. Figure 3) integrated from 380 nm to 2500 nm is reduced down to 28 %, while the glass pane without a filter transmits roughly 82 %. The effect of the ZOF 3 alone is the difference between the transmission curves with and without the filter 3. At the same time the transmission in the visible spectral range (380 nm-780 nm) is rather high for all types of filters at a viewing angle of 0 deg. (Figure 8(a)). Similar transmission curves are obtained even for viewing angles of 20 deg.. Figure 8(b) summarizes the average transmission in the visible spectral range for = 0 deg.. Compared to the pure glass pane (Tvis= 92 %), all panes 1 with ZOF 3 possess relatively high transmittance of 65 % up to 78 %. Again the effect of the ZOF 3 alone is the difference between the transmission curves with and without the filter 3.

LIST OF REFERENCE SIGNS

1       Pane

2       Substrate

3               Zero-order diffractive filter

31, 33, 35      Low-index layers

32, 34          High-index layers

4       Thin metal layer

71      Exterior half-space

72      Interior half-space

8       Sun

81   Incident electromagnetic radiation

82   Local maximum of solar radiation at 860 nm

9   Observer

c   Thickness of high-index layer
d   Spacing between diffractive structure and metal layer

f   Fill factor

p   Length of a diffractive-structure element

s   Spacing between two diffractive structures

t   Grating depth

$\alpha$   Viewing angle
$\Phi$   Turning angle
$\Lambda$   Grating period
$\Theta$   Angle of incidence

**Claims**

1.  A windowpane for use in vehicles or buildings comprising
    a substrate (2) essentially transparent to visible electromagnetic radiation and
    a zero-order diffractive filter (3) for controlling the transmission, absorption and/or reflection of solar radiation (81) in the range of 380 nm to 2500 nm, wherein said zero-order diffractive filter (3) comprises a first dielectric material layer (32) positioned between two other dielectric material layers (31, 33),
    said first dielectric material layer having a thickness between 30 nm to 500 nm,
    said first dielectric material layer (32) having a higher index of refraction than the two other dielectric material layers (31, 33) and having diffractive structures, thereby forming a resonant grating such that said zero-order diffractive filter (3) acts as a leaky waveguide to said solar radiation (81) incident on said zero-order diffractive filter (3),
    said diffractive grating having a period ($\Lambda$) between 500 nm to 1500 nm and a grating depth between 30 to 500 nm, the grating thickness, period and depth being selected in accordance to the windowpane's position relative to the sun defining an incidence angle ($\theta$) in the range from 30° to 90° at which the zero-order diffractive filter (3) is optimized, such that the zero-order diffractive filter (3) reflects, or reflects and absorbs, at least 30% of incident solar energy integrated from 380 nm to 2500 nm for at least one predetermined angle of incidence ($\theta$) from the range between 30° and 90°
    and transmits at least 70% of incident visible electromagnetic spectrum ranging from 380 nm to 780 nm of said solar radiation (81) for all viewing angles ($\alpha$) in the range between 0° and 20°.

2.  The windowpane (1) according to claim 1 or 2, wherein the diffractive structures have a square, rectangular, sinusoidal or triangular profile.

3.  The windowpane (1) according to any of the preceding claims, wherein the zero-order diffractive filter (3) comprises a metal layer (4) with a transparency in the visible spectral range of more than 75%.

4.  The windowpane (1) according to any of the preceding claims, wherein said diffractive structure has preferably a grating period ($\Lambda$) between 600 nm and 1000 nm, and a grating depth (t) preferably between 60 nm and 300 nm.

5.  The windowpane (1) according to any of the preceding claims, wherein the diffractive structures have a fill factor (f) between 0.2 and 0.8 and preferably between 0.3 and 0.7.

6.  The windowpane (1) according to any of the preceding claims, comprising at least two diffractive structures (3', 3'', 3'', $3^{n+1}$).

**7.** The windowpane (1) according to any of the preceding claims, comprising at least two diffractive structures (3', 3", 3", $3^{n+1}$), of which at least two have different grating structures.

**8.** The windowpane (1) according to claim 6, wherein the distance between the at east two diffractive structures is such to rotate the polarization of light incident on said windowpane or window (1) by approximately 90°.

**9.** A method for manufacturing the windowpane according to claim 1, wherein a step of forming said diffractive structure comprises hot, cold or UV embossing.

**10.** The method according to claim 9, comprising the step of depositing at least one layer and wherein the depositing step comprises a vacuum technique such as evaporation, sputtering, chemical vapor deposition, especially plasma-enhanced CVD, a wet-coating technique such as dye coating, e.g., curtain coating or cascade coating, and/or printing process such as gravure printing.

**Patentansprüche**

**1.** Fensterscheibe zur Verwendung in Fahrzeugen oder Gebäuden, umfassend
ein Substrat (2), das im Wesentlichen für sichtbare elektromagnetische Strahlung transparent ist und
ein Beugungsfilter nullter Ordnung (3) zur Steuerung der Transmission, Absorption und/oder Reflexion von solarer Strahlung (81) im Bereich von 380 nm bis 2500 nm, wobei das Beugungsfilter nullter Ordnung (3) eine erste dielektrische Materialschicht (32) umfasst, die zwischen zwei anderen dielektrischen Materialschichten (31, 33) angeordnet ist),
wobei die erste dielektrische Materialschicht eine Dicke zwischen 30 nm und 500 nm hat,
wobei die erste dielektrische Materialschicht (32) einen höheren Brechungsindex als die zwei anderen dielektrischen Materialschichten (31, 33) hat und Beugungsstrukturen hat, wodurch ein Resonanzgitter gebildet ist, so dass das Beugungsfilter nullter Ordnung (3) als Leckwellenleiter für die solare Strahlung (81) wirkt, die auf das Beugungsfilter nullter Ordnung (3) auftrifft,
wobei das Beugungsgitter eine Periode ($\Lambda$) zwischen 500 nm und 1500 nm und eine Gittertiefe zwischen 30 und 500 nm hat,
wobei die Gitterdicke, -periode und -tiefe gemäß der Position der Fensterscheibe relativ zur Sonne gewählt ist, die einen Einfallswinkel ($\theta$) im Bereich von 30° bis 90° definiert, für den das Beugungsfilter nullter Ordnung (3) optimiert ist, so dass das Beugungsfilter nullter Ordnung (3) mindestens 30 % der einfallenden Sonnenenergie, integriert von 380 nm bis 2500 nm für mindestens einen vorher festgelegten Einfallswinkel ($\theta$) aus dem Bereich zwischen 30° und 90°, reflektiert oder reflektiert und absorbiert,
und mindestens 70 % des einfallenden sichtbaren elektromagnetischen Spektrums im Bereich von. 38.0 nm bis 780 nm der Sonnenstrahlung (81) für alle Betrachtungswinkel ($\alpha$) im Bereich zwischen 0° und 20° durchlässt.

**2.** Fensterscheibe (1) nach Anspruch 1; wobei die Beugungsstrukturen ein quadratisches, rechteckiges, sinusförmiges oder dreieckiges Profil haben.

**3.** Fensterscheibe (1) nach einem der vorherigen Ansprüche, wobei das Beugungsfilter nullter Ordnung (3) eine Metallschicht (4) mit einer Transparenz im sichtbaren Spektralbereich von mehr als 75 % hat.

**4.** Fensterscheibe (1) nach einem der vorherigen Ansprüche, wobei die Beugungsstruktur vorzugsweise eine Gitterperiode ($\Lambda$) zwischen 600 nm und 1000 nm und eine Gittertiefe (t) vorzugsweise zwischen 60 nm und 300 nm hat.

**5.** Fensterscheibe (1) nach einem der vorherigen Ansprüche, wobei die Beugungsstrukturen einen Füllfaktor (f) zwischen 0,2 und 0,8 und vorzugsweise zwischen 0,3 und 0,7 haben.

**6.** Fensterscheibe (1) nach einem der vorherigen Ansprüche, die mindestens zwei Beugungsstrukturen (3', $3^n$, 3", $3^{n+1}$) umfasst.

**7.** Fensterscheibe (1) nach einem der vorherigen Ansprüche, die mindestens zwei Beugungsstrukturen (3', $3^n$, 3", $3^{n+1}$) umfasst, von denen mindestens zwei unterschiedliche Gitterstrukturen haben.

**8.** Fensterscheibe (1) nach Anspruch 6, wobei der Abstand zwischen den mindest zwei Beugungsstrukturen derart ist, dass die Polarisation des Lichtes, das auf die Fensterscheibe oder Fenster (1) fällt, um ca. 90° gedreht ist.

**9.** Verfahren zum Herstellen der Fensterscheibe nach Anspruch 1.

**10.** Verfahren nach Anspruch 9, das den Schritt des Abscheidens von mindestens einer Schicht umfasst und wobei der Abscheidungsschritt ein Vakuumverfahren umfasst, wie zum Beispiel Verdampfen, Sputtern, chemische Dampfabscheidung, besonders plasmagestützte Dampfabscheidung, ein Nassbeschichtungsverfahren, wie zum Beispiel Farbstoffbeschichtung, z.B. das Florstreichverfahren oder die Kaskadenbeschichtung, und/oder einen Druckprozess, wie zum Beispiel das Gravurstreichverfahren.

**Revendications**

**1.** Vitre pour usage dans des véhicules ou des bâtiments comprenant :

un substrat (2) essentiellement transparent au rayonnement électromagnétique visible et
un filtre de diffraction d'ordre zéro (3) pour réguler la transmission, l'absorption et/ou la réflexion du rayonnement solaire (81) dans la plage de 380 nm à 2500 nm, dans laquelle ledit filtre de diffraction d'ordre zéro (3) comprend une première couche de matière diélectrique (32) positionnée entre deux autres couches de matière diélectrique (31, 33),
ladite première couche de matière diélectrique ayant une épaisseur entre 30 nm et 500 nm,
ladite première couche de matière diélectrique (32) ayant un indice de réfraction supérieur à celui des deux autres couches de matière diélectrique (31, 33) et ayant des structures diffractives, formant de ce fait une grille résonnante de sorte que ledit filtre de diffraction d'ordre zéro (3) agit comme un guide d'onde fuyant sur ledit rayonnement solaire (81) incident par rapport au dit filtre de diffraction d'ordre zéro (3),
ladite grille de diffraction ayant une période ($\Lambda$) entre 500 nm et 1500 nm et une profondeur de grille entre 30 nm et 500 nm,
l'épaisseur, la période et la profondeur de grille étant sélectionnées en fonction de la position relative de la vitre par rapport au soleil définissant un angle d'incidence ($\theta$) dans la plage entre 30° et 90° auquel le filtre de diffraction d'ordre zéro (3) est optimisé,
de sorte que le filtre de diffraction d'ordre zéro (3) reflète, ou reflète et absorbe, au moins 30 % de l'énergie solaire incidente intégrée de 380 nm à 2500 nm pour au moins un angle prédéterminé d'incidence ($\theta$) dans la plage entre 30° et 90°,
et transmet au moins 70 % du spectre électromagnétique visible incident dans la plage de 380 nm à 780 nm dudit rayonnement solaire (81) pour tous les angles de vision ($\alpha$) dans la plage entre 0° et 20°.

**2.** Vitre (1) selon la revendication 1 ou 2, dans laquelle les structures diffractives ont un profil carré, rectangulaire, sinusoïdal ou triangulaire.

**3.** Vitre (1) selon l'une quelconque des revendications précédentes, dans laquelle le filtre de diffraction d'ordre zéro (3) comprend une couche de métal (4) avec une transparence dans la plage spectrale visible de plus de 75 %.

**4.** Vitre (1) selon l'une quelconque des revendications précédentes, dans laquelle ladite structure directive a de préférence une période de grille ($\Lambda$) entre 600 nm et 1000 nm, et une profondeur de grille (t) de préférence entre 60 nm et 300 nm.

**5.** Vitre (1) selon l'une quelconque des revendications précédentes, dans laquelle les structures diffractives ont un facteur de remplissage (f) entre 0,2 et 0,8 et de préférence entre 0,3 et 0,7.

**6.** Vitre (1) selon l'une quelconque des revendications précédentes comprenant au moins deux structures diffractives (3', $3^n$, 3", $3^{n+1}$).

**7.** Vitre (1) selon l'une quelconque des revendications précédentes comprenant au moins deux structures diffractives (3', $3^n$, 3", $3^{n+1}$), au moins deux d'entre elles ayant différentes structures de grille.

**8.** Vitre (1) selon la revendication 6, dans laquelle la distance entre les au moins deux structures diffractives est telle qu'elle permet la rotation de la polarisation de la lumière incidente sur ladite vitre ou fenêtre (1) d'environ 90°.

**9.** Procédé de fabrication de la vitre selon la revendication 1, dans lequel une étape consistant à former ladite structure diffractive comprend l'estampage à chaud, à froid ou à UV.

**10.** Procédé selon la revendication 9, comprenant l'étape consistant à déposer au moins une couche et dans lequel l'étape de dépôt comprend une technique par dépression comme l'évaporation, la pulvérisation cathodique, le dépôt de vapeurs chimiques, particulièrement CVD avec amélioration par plasma, une technique d'enduit humide comme l'enduit de colorant, par exemple, l'enduit en rideau ou l'enduit en cascade, et/ou un processus d'impression comme l'impression de gravure.

Fig. 1(a)

Fig. 1(b)

Fig. 4

Fig. 2

Fig. 3

wavelength [nm]

Fig. 5

Fig. 6(a)

Fig. 6(b)

Fig. 7(a)

Fig. 7(b)

Fig. 8(a)

Fig. 8(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4337990 A
- US 4799745 A
- US 6673427 B
- US 6094306 A
- WO 03052232 A
- JP 2002326846 A

### Non-patent literature cited in the description

- **V. WITTWER ; P. NITZ ; A. GOMBERT.** Application of microstructured surfaces in architectural glazings. *Proceedings of the 4th International Conference on Coatings on Glass,* 2002, 643-647
- **TSUTSUI.** Doubling Coupling-Out Efficiency in Organic Light-Emitting Devices Using a Thin Silica Aerogel Layer. *Adv. Mater.,* 2001, vol. 13, 1149-1152
- **H. SEIBERLE et al.** Photo-Aligned Anisotropical Optical Thin Films. *Journal of the Society for Information Display,* vol. 12, 87-92
- Gold and silver nanoparticles: A class of chromophores with colors tunable in the range from 400 to 750 nm. *Yugang Sun and Younan Xia, Analyst,* 2003, vol. 128, 686-691
- **P. MALLER-BUSCHBAUM ; E. BAUER ; O. WUNNICKE ; M. STAMM.** The control of thin film morphology by the interplay of dewetting, phase separation and microphase separation. *J. Phys.: Condens. Matter,* 2005, vol. 17, 363-386